# EUROPÄISCHE PATENTSCHRIFT

(11) **EP 3 589 381 B1**
(45) Veröffentlichungstag und Bekanntmachung des Hinweises auf die Patenterteilung: **18.08.2021**
(21) Anmeldenummer: 18715482.8
(22) Anmeldetag: 02.03.2018
(51) Int. Cl.: B01D 19/00, C01B 3/00

(54) **VERFAHREN ZUR ENTGASUNG VON WASSERSTOFF AUS EINER ZUR WASSERSTOFFSPEICHERUNG EINGESETZTEN FLÜSSIGKEIT**
METHOD FOR DEGASSING HYDROGEN FROM A HYDROGEN STORING LIQUID
PROCÉDÉ DE DÉGAZAGE DE HYDROGÈNE D'UN LIQUIDE PORTEUR DE HYDROGÈNE

(30) Priorität: 04.03.2017 DE 102017002080
(43) Veröffentlichungstag der Anmeldung: 08.01.2020
(73) Patentinhaber: Hydac Filter Systems GmbH, 66280 Sulzbach/Saar (DE)
(72) Erfinder: SCHUNK, Andreas, 66914 Waldmohr (DE); HEGMANN, Martin, 66453 Gersheim (DE)
(74) Vertreter: Bartels und Partner, Patentanwälte
(86) Internationale Anmeldenummer: PCT/EP2018/055204
(87) Internationale Veröffentlichungsnummer: WO 2018/162355

(56) Entgegenhaltungen:
- EP-A1- 2 628 517
- EP-A1- 2 873 649
- DE-A1- 10 129 100
- DE-C1- 19 510 023
- US-A1- 2005 109 211
- US-A1- 2007 140 916
- US-A1- 2012 279 396

## Beschreibung

Die Erfindung betrifft ein Verfahren zur Entgasung von Wasserstoff aus einer zur Wasserstoffspeicherung eingesetzten Flüssigkeit.

Vorrichtungen zum Trennen von Fluidgemischen sind in unterschiedlichen Ausgestaltungen und für unterschiedliche Anwendungszwecke auf dem Markt verfügbar. Aus DE 195 10 023 C1 ist eine Vorrichtung zum Trennen von Fluidgemischen, insbesondere von Öl und Wasser, bekannt mit einem Vakuumbehälter, in den das Fluidgemisch mittels einer Zerstäubungseinrichtung zerstäubbar ist. Mindestens eine flüssige Komponente des Fluidgemisches ist nach der Auftrennung mittels einer Hydropumpe aus dem Vakuumbehälter ableitbar und die jeweils andere Komponente ist mittels einer Vakuumpumpe aus dem Vakuumbehälter gas- und/oder dampfförmig absaugbar. Durch die Baueinheit mit Zerstäubungseinrichtung, Vakuumbehälter und zugehörigen Pumpen ist eine Vorrichtung zum Trennen von Fluidgemischen geschaffen, die bei geringer Baugröße eine optimale Trennung der Komponenten erlaubt sowie wirtschaftlich günstig sowohl in der Herstellung als auch im Betrieb ist.

DE 101 35 420 A1 offenbart eine Vorrichtung zum Auftrennen eines Fluidgemisches in mindestens zwei seiner Bestandteile mit einer Arbeitskammer und einer Ruhekammer, die der Aufnahme des Fluidgemisches sowie von abgesetzten Bestandteilen desselben dient. Mit einer Motor-Pumpeneinheit ist das Fluidgemisch aus der Ruhekammer durch einen Querstromfilter in die Arbeitskammer förderbar. Die Motor-Pumpeneinheit ist aus einer Tauchpumpe gebildet, die zusammen mit dem Querstromfilter als Baueinheit in der Arbeitskammer aufgenommen ist, wodurch ein Zweibehälter-Konzept mit Ruhe- und Arbeitskammer realisiert ist. Hierdurch ist eine vielfältig einsetzbare Vorrichtung geschaffen, die wenig Bauraum einnimmt und insbesondere für einen mobilen Einsatz geeignet ist.

Eine weitere Vorrichtung zur Behandlung von Fluidgemischen, die Gase, wie insbesondere Wasserstoff, Luft, Stickstoff oder Erdgase, sowie Flüssigkeiten, wie insbesondere ionische Flüssigkeiten, Hydrauliköl oder Prozessflüssigkeiten, enthalten, ist aus DE 10 2014 012 094 A1 bekannt. Die bekannte Vorrichtung weist mindestens eine Abscheidestufe auf zum Auftrennen des Fluidgemisches in einen Flüssigkeitsanteil und einen Gasanteil, der mit einem verbleibenden Flüssigkeitsanteil verunreinigt ist, aus dem mit mindestens einer weiteren Abscheidestufe dieser verbliebene Flüssigkeitsanteil abgereinigt wird. Mit der weiteren Abscheidestufe wird eine Feinabtrennung durchgeführt, so dass ein betreffender Flüssigkeitsanteil, wie ionische Flüssigkeit, in für die Verwendung erforderlicher Reinheit zur Verfügung steht und der erhaltene Gasanteil frei von dieser Flüssigkeit ist.

Wasserstoff wird nicht nur als Industriegas, sondern zunehmend auch als Energieträger, beispielsweise in der Landwirtschaft, in Industrie- und Wohnanlagen sowie in Fahrzeugen, eingesetzt. Um die Risiken bei der Handhabung eines hochgradig flüchtigen und explosiven Gases zu vermeiden, wird Wasserstoff in Flüssigkeiten gespeichert. Die unter dem Fachbegriff "Liquid Organic Hydrogen Carrier" bekannten Flüssigkeiten ermöglichen eine betriebssichere, verlustfreie Speicherung von Wasserstoff sowie eine einfache Speicherung und einen einfachen Transport in kommerziellen Öltanks, beispielsweise zur Versorgung einer Tankstelleninfrastruktur. Zur Speicherung von Wasserstoff wird beispielsweise die dieselähnliche Flüssigkeit Dibenzyltoluol eingesetzt, die sich einfach, sicher und kostengünstig handhaben, lagern und transportieren lässt.

Die bekannten Vorrichtungen zum Trennen von Fluidgemischen stoßen bei der Trennung des Wasserstoffs aus dem Wasserstoffspeicher an ihre Grenzen. Die Freisetzung des gespeicherten Wasserstoffs aus dem flüssigen Trägermaterial erfordert insbesondere die Handhabung des flüchtigen, leicht entflammbaren Wasserstoffs nach dem Austreten aus dem Wasserstoffspeicher. Um den Wasserstoff als Kraftstoff, beispielsweise für Brennstoffzellen-Fahrzeuge, oder zur Versorgung von Wasserstofftankstellen einzusetzen, ist eine sichere Trennung des Wasserstoffgases aus dem flüssigen Wasserstoffspeicher erforderlich.

Die US 2007/0140916 A1 offenbart ein Verfahren zur Entgasung von fließfähigen Fluiden, umfassend einen Desorber, eine Zirkulationspumpe, eine Vakuumpumpe, mindestens einen Sensor, und eine Steuereinheit, mit folgenden Verfahrensschritten: Befüllen des Desorbers mit der zu entgasenden Flüssigkeit, wobei bei einem Befüllungsvorgang mit der Flüssigkeit mittels der Zirkulationspumpe ein Unterdruck im Desorber erzeugbar ist, und Durchströmen des Desorbers von dieser Flüssigkeit; Umwälzen der Flüssigkeit während eines Entgasungsvorgangs im Desorber mittels der Zirkulationspumpe; Abführen des Gases aus dem Desorber beim Entgasungsvorgang mittels der Vakuumpumpe; Messen des Drucks im Desorber und/oder Messen der Zeit mittels des jeweiligen Sensors; Beenden des Entgasungsvorgangs bei Messung eines vorgegebenen Drucks durch den jeweiligen Sensor und/oder bei Messung einer vorgegebenen Verweildauer der Flüssigkeit im Desorber mittels der Steuereinheit.

Die US 2012/0279396 A1 offenbart ein Verfahren zur Entgasung von fließfähigen Fluiden, umfassend: einen Desorber, einen mit dem Desorber verbundenen Gasanschluss, eine Zirkulationspumpe, eine Vakuumpumpe, mindestens einen Sensor und eine Steuereinheit, mit dem Verfahrensschritt des Zuleitens eines weiteren Gases über den Gasanschluss in den Desorber.

Die EP 2 873 649 A1 und die DE 101 29 100 A1 offenbaren Vorrichtungen zur Entgasung von fließfähigen Fluiden.

Der Erfindung liegt die Aufgabe zugrunde, die Trennung von Wasserstoffgas aus einem flüssigen Wasserstoffspeicher in einfacher, zuverlässiger und sicherer Weise zu ermöglichen, wobei ein Entflammen des abgetrennten Wasserstoffs wirksam unterbunden sein soll.

Diese Aufgabe wird gelöst durch ein Verfahren zur Entgasung von Wasserstoff aus einer zur Wasserstoffspeicherung eingesetzten Flüssigkeit nach der Merkmalsausgestaltung des Patentanspruchs 1. Vorteilhafte Ausgestaltungen der Erfindung sind Gegenstand der Unteransprüche.

Das erfindungsgemäße Verfahren zur Entgasung von Wasserstoff aus einer zur Wasserstoffspeicherung eingesetzten Flüssigkeit mittels einer Vorrichtung, umfassend einen Desorber, einen mit dem Desorber verbundenen Gasanschluss, eine Zirkulationspumpe, eine Vakuumpumpe, mindestens einen Sensor, und eine Steuereinheit, weist die folgenden Verfahrensschritte auf:
- Befüllen des Desorbers mit der zu entgasenden Flüssigkeit, wobei bei einem Befüllungsvorgang mit der Flüssigkeit mittels der Vakuumpumpe ein Unterdruck im Desorber erzeugbar ist, und Durchströmen des Desorbers von dieser Flüssigkeit;
- Umwälzen der Flüssigkeit während eines Entgasungsvorgangs im Desorber mittels der Zirkulationspumpe;
- Abführen des Wasserstoffgases aus dem Desorber beim Entgasungsvorgang mittels der Vakuumpumpe;
- Messen des Drucks im Desorber und/oder Messen der Zeit mittels des jeweiligen Sensors;
- Beenden des Entgasungsvorgangs bei Messung eines vorgegebenen Drucks durch den jeweiligen Sensor und/oder bei Messung einer vorgegebenen Verweildauer der Flüssigkeit im Desorber mittels der Steuereinheit; und
- Zuleiten eines weiteren Gases über den Gasanschluss in den Desorber während einer Entleerung der Flüssigkeit aus dem Desorber, so dass ein Druckausgleich stattfindet und neben dem zur Entleerung erforderlichen Druck eine Gasatmosphäre im Innenraum des Desorbers erzeugt wird, die ein Entflammen einer möglicherweise im Desorber verbliebenen Restmenge des abgetrennten Wasserstoffs wirksam unterbindet.

Eine Vorrichtung zur Entgasung von fließfähigen Fluiden, insbesondere von zur Wasserstoffspeicherung eingesetzten Flüssigkeiten, umfasst einen mit zu entgasendem Fluid befüllbaren und von diesem durchströmbaren Desorber, eine Zirkulationspumpe zur Umwälzung des Fluids während eines Entgasungsvorgangs im Desorber, eine Vakuumpumpe zur Erzeugung eines Unterdrucks im Desorber bei einem Befüllungsvorgang mit Fluid und zur Abführung des Gases aus dem Desorber beim Entgasungsvorgang, mindestens einen Sensor zur Messung des Drucks im Desorber und/oder zur Zeitmessung, und eine Steuereinheit, die bei Messung eines vorgegebenen Drucks durch den jeweiligen Sensor und/oder bei Messung einer vorgegebenen Verweildauer des Fluids im Desorber den Entgasungsvorgang beendet.

Zentraler Bestandteil der Vorrichtung ist der Desorber, der mit dem zu entgasenden Fluid befüllt und zur Abtrennung des jeweiligen Gases aus dem Fluid von diesem durchströmt wird. Der zugehörige Fluidstrom wird durch die Zirkulationspumpe erzeugt, welche typischerweise das Fluid in einem Kreislauf aus dem Desorber und wieder in diesen zurückführt. Die Vakuumpumpe hat die Funktion, eine sichere Befüllung des Desorbers durch einen entsprechenden Unterdruck zu gewährleisten und eine Schutzatmosphäre im Desorber zu erzeugen, unter welcher der Abscheidevorgang des Gases aus dem Fluid, insbesondere von Wasserstoff aus einer Speicherflüssigkeit, betriebssicher abläuft. Das aus dem Fluid bei der Entgasung austretende Gas wird während des Entgasungsvorgangs über die Vakuumpumpe aus dem Desorber abgeleitet. Auf diese Weise wird eine erneute Vermischung von Gas und Fluid unterbunden.

Sobald der mindestens eine Sensor einen vorgegebenen Druck, der einer vorgegebenen Entgasung des Fluids entspricht, misst, wird der Entgasungsvorgang im Desorber über die Steuereinheit beendet. Um sicherzustellen, dass ein bestimmter Schwellwert für die Entgasung erreicht ist, wird vorzugsweise zusätzlich die Zeit gemessen und der Entgasungsvorgang bei Messung des vorgegebenen Drucks über eine vorgegebene Zeit beendet. Alternativ oder zusätzlich wird der Entgasungsvorgang bei Ablauf einer vorgegebenen Verweildauer des Fluids im Desorber beendet, unabhängig vom Fortschritt der Entgasung des Fluids.

Bei einer bevorzugten Ausführungsform der Vorrichtung sind im Desorber Mittel zur Vergrößerung der wirksamen Abscheidefläche, vorzugsweise zylindrische, kugelförmige oder kegelförmige Edelstahlfüllkörper, eingebracht, welche den Innenraum des Desorbers zumindest teilweise füllen. Diese Mittel, insbesondere die zylindrischen Edelstahlfüllkörper, werden von dem zu entgasenden Fluid beim Entgasungsvorgang umströmt. Beispielsweise erfolgt die Freisetzung von Wasserstoff aus einem flüssigen Wasserstoffspeicher, im Fachjargon "Liquid Organic Hydrogen Carrier" genannt, durch katalytische Prozesse, welche an der zugehörigen Oberfläche gestartet werden.

Das bevorzugt als Speichermedium eingesetzte Dibenzyltoluol ist ein flüssiger organischer Kohlenwasserstoff, welcher in einem Temperaturbereich von -39°C bis 390°C flüssig ist und bei Umgebungsdruck gelagert und transportiert werden kann. Die Freisetzung des gespeicherten Wasserstoffs bei der Dehydrierung ist ein endothermer Prozess. Durch die Vorrichtung ist eine voll kontrollierbare, kontinuierliche Wasserstofffreisetzung möglich. Die Wasserstoffreinheit wird besonders bevorzugt durch eine Gaswäsche, welcher das aus dem Desorber beim Entgasungsvorgang abgeführte Gas zugeführt wird, sichergestellt. Hierfür kann beispielsweise die aus der eingangs erwähnten DE 10 2014 012 094 A1 bekannte Vorrichtung eingesetzt werden.

Bei einer weiteren bevorzugten Ausführungsform der Vorrichtung ist ein Vorabscheider zwischen einem Fluidreservoir und dem Desorber geschaltet und mit Fluid aus dem Fluidreservoir befüllbar. Hieraus ergibt sich der Vorteil, dass in einem ersten Prozessschritt das aus dem in den Vorabscheider gefüllten Fluid austretende Gas abgetrennt und in einem zweiten Prozessschritt Gas in einem speziellen Entgasungsvorgang aus dem in den Desorber überführten Fluid abgeschieden wird. Die Vorrichtung ist im zweistufigen Anlagenbetrieb mit Vorabscheidung und zentralem Abscheideprozess betreibbar. Ein weiterer Vorteil des Vorabscheiders ist die kontinuierliche Befüllung der Desorber mit dem zu entgasenden Fluid, wie einem Liquid Organic Hydrogen Carrier, aus dem Vorprozess. Das Vorabscheiden stellt zugleich einen Sammeltank dar.

Die Vorrichtung kann zur Entgasung von fließfähigen Fluiden unterschiedlichster Art eingesetzt werden. Hierbei ist eine Abscheidung von einzelnen Gasen, jedoch auch von Gasgemischen aus einem Fluid möglich. Die Abmessung der Vorrichtung, insbesondere die Größe des Desorbers und des Vorabscheiders, sind entsprechend der jeweiligen Anwendung bedarfsgerecht gewählt. Die Entgasungsvorrichtung kann fest in eine Anlage eingebaut und mit dem Fluidreservoir, einem Gasaustritt und einem Fluidaustritt fest verbunden sein. Es ist jedoch auch vorstellbar, die Vorrichtung als mobile Einheit auszugestalten, welche für den Entgasungsvorgang an eine zugehörige Anlage, beispielsweise an eine Wasserstofftankstelle, angeschlossen wird.

Besonders bevorzugt ist im Vorabscheider und/oder im Desorber ein Niveaugeber vorgesehen mit mindestens einem dem Befüllungs-, Entleerungs- und/oder dem Entgasungsvorgang zugeordneten Schaltpunkt entsprechend des jeweiligen Füllstands des Fluids. Zweckmäßigerweise ist über den jeweiligen Niveaugeber ein minimaler und ein maximaler Füllstand des Fluids für den Betrieb der Vorrichtung vorgegeben. Über die Steuereinheit wird bei Überschreiten des maximalen Füllstands oder Unterschreiten des minimalen Füllstands die Befüllung mit Fluid gestoppt oder gestartet. Alternativ wird bei Überschreiten des Maximums zumindest eine Teilmenge des Fluids unbehandelt aus dem jeweiligen Behältnis abgeleitet. Besonders bevorzugt wird über den jeweiligen Niveaugeber die beim Befüllungsvorgang zugeführte oder beim Entleerungsvorgang abgeführte Fluidmenge eingestellt und ein optimaler Prozessablauf mit der Vorrichtung gewährleistet.

Bei einer bevorzugten Ausführungsform der Vorrichtung ist ein mit dem Vorabscheider und/oder dem Desorber verbundener Gasanschluss vorgesehen zum Druckausgleich während einer Entleerung. Besonders bevorzugt ist an den Gasanschluss eine Stickstoffflasche zur Zuführung von Stickstoff als inertes Gas in den Vorabscheider bzw. den Desorber angeschlossen. Neben dem zur Entleerung erforderlichen Druck wird eine Gasatmosphäre im jeweiligen Innenraum erzeugt, die ein Entflammen einer möglicherweise im Desorber verbliebenen Restmenge des abgetrennten Wasserstoffs wirksam unterbindet.

Bei einer weiteren bevorzugten Ausführungsform der Vorrichtung sind am Desorber ein Gasaustritt, welcher sich an eine Ventil-einrichtung und die Vakuumpumpe anschließt, und ein Fluidaustritt, welcher sich an die Zirkulationspumpe und eine Ventileinrichtung anschließt, angeordnet. Über den Gasaustritt wird das aus dem Fluid austretende Gas während des Entgasungsvorgangs abgeführt. Besonders bevorzugt schließt sich an den Gasaustritt eine Filtrations- und/oder Reinigungseinheit für eine gegebenenfalls erforderliche Gaswäsche des abgetrennten Gases an. Über den Fluidaustritt wird nach Abschluss des Entgasungsvorgangs das entgaste Fluid aus dem Desorber abgeleitet und zweckmäßigerweise einer Sammeleinrichtung oder einer weiteren Verwendung zugeführt.

Weiter ist vorteilhaft, dass zwischen dem einer Fluidleitung zugeordneten Vorabscheider und dem Desorber eine Ventileinrichtung und eine einer weiteren Fluidzuleitung zugeordnete weitere Ventileinrichtung, vorzugsweise ein Wegehahn, angeordnet sind, und dass der Desorber in Abhängigkeit der Stellung der weiteren Ventileinrichtung über die Fluidzuleitung und den Vorabscheider oder über die weitere Fluidzuleitung mit zu entgasendem Fluid befüllbar ist. Hieraus ergibt sich der Vorteil, dass der Desorber wahlweise über den Vorabscheider oder direkt aus dem Fluidreservoir befüllbar ist.

Die Erfindung betrifft ein Verfahren zur Entgasung von Wasserstoff aus einer zur Wasserstoffspeicherung eingesetzten Flüssigkeit.

Bei dem erfindungsgemäßen Verfahren wird in einem Aggregat Fluid einem Behälter, hier dem Desorber, zu- und abgeführt, in welchem durch die Vakuumpumpe ein Vakuum erzeugt und das Fluid durch den Unterdruck entgast wird. Das Gas, das aufgrund des Unterdrucks im Desorber aus dem Fluid austritt, wird durch die Vakuumpumpe abgesaugt und tritt am Gasaustritt aus. Während des Entgasungsprozesses wird das Fluid im Desorber umgepumpt und der Druck im Desorber wird gemessen, um aus dem gemessenen Druck einen Rückschluss auf den Gasgehalt im Fluid ziehen zu können. Erfindungsgemäß wird der Entgasungsvorgang bei Erreichung eines vorgegebenen Gasgehalts bzw. eines zugehörigen Drucks oder bei Ablauf einer vorgegebenen Zeit beendet.

Bei einer bevorzugten Variante des erfindungsgemäßen Verfahrens wird für einen Entleerungsvorgang ein weiteres Gas, vorzugsweise Stickstoff, zum Druckausgleich über eine Zuleitung in den Desorber geleitet und anschließend mittels der Zirkulationspumpe das entgaste Fluid aus dem Desorber zum Fluidaustritt geleitet. Auf diese Weise wird eine sichere, störungsfreie Entleerung des Desorbers nach Abschluss des Entgasungsvorgangs gewährleistet.

Bei einer weiteren bevorzugten Variante des erfindungsgemäßen Verfahrens wird beim Befüllungsvorgang mittels der Vakuumpumpe ein Unterdruck im Desorber erzeugt und anschließend zu entgasendes Fluid von einem Fluidreservoir über die Fluidzuleitung und den Vorabscheider oder über die weitere Fluidzuleitung im Desorber geleitet. Aufgrund der Doppelfunktion der Vakuumpumpe zur Erzeugung eines Unterdrucks sowohl beim Befüllungsvorgang als auch beim Entgasungsvorgang ergibt sich eine kompakte Bauweise und ein einfacher Aufbau der eingesetzten Vorrichtung.

Weiter ist vorteilhaft, dass in einem ersten Betriebsmodus der Vorrichtung beim Befüllungsvorgang eine der Fluidzuleitung zugeordnete Ventileinrichtung geöffnet und zu entgasendes Fluid aus dem Fluidreservoir in den Vorabscheider geleitet wird bis zum Erreichen eines ersten Schaltpunktes des zugehörigen Niveaugebers, die zwischen dem Vorabscheider und dem Desorber angeordnete Ventileinrichtung geöffnet und das zumindest teilweise entgaste Fluid aus dem Vorabscheider in den Desorber geleitet wird bis zum Erreichen eines zweiten Schaltpunktes des zugehörigen weiteren Niveaugebers, und die dem Vorabscheider vorgeschaltete Ventileinrichtung und die zwischen den Vorabscheider und den Desorber geschaltete Ventileinrichtung geschlossen werden. Zudem ist vorteilhaft, dass in einem zweiten Betriebsmodus der Vorrichtung beim Befüllungsvorgang die der weiteren Fluidzuleitung zugeordnete, dem Desorber vorgeschaltete Ventileinrichtung geöffnet und zu entgasendes Fluid aus dem Fluidreservoir in den Desorber geleitet wird bis zum Erreichen eines zweiten Schaltpunktes des zugehörigen weiteren Niveaugebers, und die zugehörige Ventileinrichtung geschlossen wird.

Über das entsprechende Öffnen und Schließen von Ventileinrichtungen wird der Befüllungsvorgang bei der erfindungsgemäßen Verwendung gesteuert und im Vorabscheider sowie im Desorber der für den jeweiligen Prozessschritt erforderliche Füllstand eingestellt. Besonders bevorzugt entspricht das beim Entleerungsvorgang aus dem Desorber abgeführte Fluidvolumen dem beim Befüllungsvorgang zugeführten Fluidvolumen. Auf diese Weise ist ein Anlagenbetrieb mit der erfindungsgemäßen Verwendung in besonders einfacher Weise realisiert.

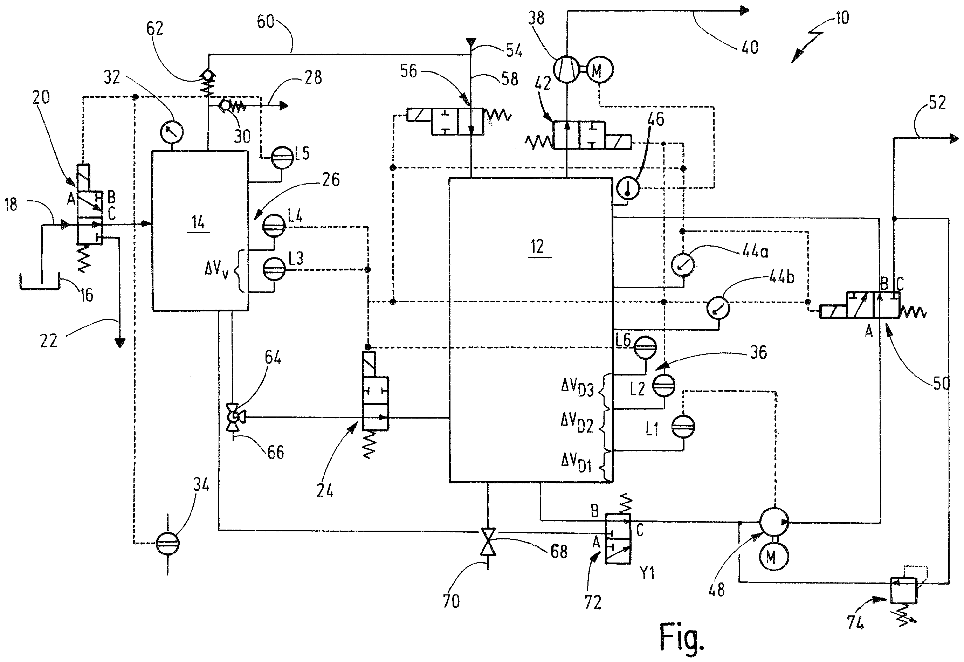

Bei einer weiteren bevorzugten Variante des erfindungsgemäßen Verfahrens ist das Fluid ein zur Wasserstoffspeicherung eingesetztes Medium, vorzugswiese Dibenzyltoluol, aus welchem mittels der Vorrichtung Wasserstoff abgeschieden wird. Dieses Verfahren kann sich an eine Speicherung oder einen Transport des mit Wasserstoff geladenen Speichers anschließen. Besonders bevorzugt ist die beim Verfahren eingesetzte Vorrichtung fest in eine Anlage integriert oder als mobile Baueinheit ausgestaltet. Weitere Vorteile und Merkmale der Erfindung ergeben sich aus der Figur und der nachfolgenden Beschreibung der Zeichnung. Die vorstehend genannten und die weiter angeführten Merkmale können erfindungsgemäß jeweils einzeln oder in beliebigen Kombinationen an einer Vorrichtung sowie bei der zugehörigen Verwendung realisiert sein. Die in den Figuren gezeigten Merkmale sind rein schematisch und nicht maßstäblich zu verstehen.

Es zeigt die einzige Figur einen Schaltplan der Vorrichtung zur Entgasung von fließfähigen Fluiden.

Die Figur zeigt eine Vorrichtung 10 zur Entgasung von fließfähigen Fluiden mit einem Desorber 12 und einem Vorabscheider 14. Der Vorabscheider 14 ist mit einem Fluidreservoir 16 über eine Fluidzuleitung 18 verbunden. In der Fluidzuleitung 18 ist eine als Wegeventil ausgebildete erste Ventileinrichtung 20 angeordnet. In einer ersten Ventilstellung der ersten Ventileinrichtung 20 ist das Fluidreservoir 16 mit dem Vorabscheider 14, in einer zweiten Ventilstellung mit einem Notüberlauf 22 verbunden.

In einer Verbindungsleitung zwischen dem Vorabscheider 14 und dem Desorber 12 ist eine als Wegeventil ausgebildete zweite Ventileinrichtung 24 angeordnet. In einer ersten Ventilstellung der zweiten Ventileinrichtung 24 ist der zugehörige Fluidweg geöffnet, in einer zweiten Ventilstellung geschlossen. Im Vorabscheider 14 ist ein Niveaugeber 26 mit Schaltpunkten L3, L4 und L5 angeordnet. Das im Vorabscheider 14 aus dem zu entgasenden Fluid austretende Gas tritt an einem Gasaustritt 28 aus dem Vorabscheider 14 aus. In eine Verbindungsleitung vom Vorabscheider 14 zum Gasaustritt 28 ist ein Rückschlagventil 30 angeordnet. Weiter ist am Vorabscheider 14 ein Drucksensor 32 zur Messung des Drucks im Vorabscheider 14 vorgesehen. Die Vorrichtung 10 weist eine Tropfwanne (in der Fig nicht dargestellt) auf mit einem darin angeordneten Schwimmerschalter 34.

Am Desorber 12 ist ein weiterer Niveaugeber 36 mit Schaltpunkten L1, L2 und L6 und weiter eine Vakuumpumpe 38 in einer Verbindungsleitung zu einem weiteren Gasaustritt 40 angeordnet. Zwischen dem Desorber 12 und der Vakuumpumpe 38 ist eine als Wegeventil ausgebildete dritte Ventileinrichtung 42 angeordnet. In einer ersten Ventilstellung der dritten Ventileinrichtung 42 ist die zugehörige Fluidverbindung freigegeben, in einer zweiten Ventilstellung gesperrt. Zur Messung des Drucks im Desorber 12 sind zwei weitere Drucksensoren 44a und 44b vorgesehen. Weiter ist am Desorber 12 ein Temperatursensor 46 angeordnet.

In einem Leitungskreis sind der Desorber 12, eine Zirkulationspumpe 48 und eine als Wegeventil ausgebildete vierte Ventileinrichtung 50 angeordnet. In einer ersten Ventilstellung der vierten Ventileinrichtung 50 ist die von der Zirkulationspumpe 48 kommende Leitung mit einer zum Desorber 12 führenden Rückleitung verbunden und somit der Kreislauf zur Umwälzung des den Desorber 12 durchströmenden Fluids geschlossen. In einer zweiten Ventilstellung der vierten Ventileinrichtung 50 ist die von der Zirkulationspumpe 48 kommende Leitung mit einem Fluidaustritt 52 verbunden und somit der Fluidweg zur Ableitung von Fluid aus dem Desorber 12 zum Fluidaustritt 52 freigegeben. Die Vakuumpumpe 38 und die Zirkulationspumpe 48 sind jeweils über einen Motor M antreibbar.

Weiter führt ein Gasanschluss 54 zum Desorber 12, wobei in einer Zuleitung 58 zwischen dem Gasanschluss 54 und dem Desorber 12 eine als Wegeventil ausgestaltete fünfte Ventileinrichtung 56 angeordnet ist. Die fünfte Ventileinrichtung 56 gibt in einer ersten Ventilstellung den Fluidweg über die Zuleitung 58 frei und versperrt diesen in einer zweiten Ventilstellung. Vom Gasanschluss 54 führt eine weitere Zuleitung 60 zum Vorabscheider 14, wobei in der weiteren Zuleitung 60 ein weiteres Rückschlagventil 62 angeordnet ist.

In der Verbindungsleitung zwischen dem Vorabscheider 14 und dem Desorber 12 ist eine als Wegehahn ausgebildete weitere Ventileinrichtung 64 angeordnet, über welche der Vorabscheider 14 abgetrennt und über eine weitere Fluidzuleitung 66 Fluid aus dem Fluidreservoir 16 in den Desorber 12 geleitet werden kann. Neben dem Fluidaustritt 52 ist am Desorber 12 eine über ein Absperrventil 68 sperr- und öffenbare Fluidableitung 70 ausgebildet.

Die Vorrichtung 10, deren Hydraulikschaltplan der Figur zu entnehmen ist, lässt sich in drei unterschiedlichen Betriebsmodi, Anlagenbetrieb, Entgasung aus dem Fluidreservoir und Handbetrieb, betreiben. Die einzelnen Betriebsmodi können über die Steuereinheit ausgewählt werden.

Der Betriebsmodus Anlagenbetrieb erfordert, dass die als 3/2-Wege-Kugelhahn ausgebildete weitere Ventileinrichtung 64 zwischen dem Vorabschalter 14 und dem Desorber 12 so eingestellt ist, dass der Vorabschalter 14 mit dem Desorber 12 fluidführend verbunden ist. Das fließfähige Fluid, beispielsweise ein flüssiges Wasserstoffspeichermedium, wird durch Überdruck in der zugehörigen Anlage dem Vorabschalter 14 der Vorrichtung 10 zugeführt. Hierzu wird die erste Ventileinrichtung 20 unter Strom gesetzt und in die in der Figur gezeigte erste Ventilstellung A-B gebracht. Sobald das Fluidniveau entsprechend des zweiten Schaltpunktes L4 im Vorabscheider 14 durch den Niveaugeber 26 detektiert wird, wird die zweite Ventileinrichtung 24 geöffnet und in die in der Figur gezeigte erste Ventilstellung gebracht.

Durch die Vakuumpumpe 38 wird im Desorber 12 ein Unterdruck erzeugt. Durch die Druckdifferenz zwischen dem Vorabscheider 14 und dem Desorber 12 strömt das Fluid bei geöffneter zweiter Ventileinrichtung 24 in den Desorber 12. Durch das in der weiteren Zuleitung 60 angeordnete weitere Rückschlagventil 62 wird der Druck im Vorabscheider 14 konstant gehalten, so dass der Vorabscheider 14 entleert werden kann. Anstelle des Rückschlagventils 62 kann optional auch ein Druckregler (in der Figur nicht dargestellt) verwendet werden. Die zweite Ventileinrichtung 24 bleibt bei dem Befüllungsvorgang so lange geöffnet, bis das Fluidniveau entsprechend des dritten Schaltpunktes L6, gemessen durch den weiteren Niveaugeber 36 im

Desorber 12, erreicht ist. Das von der Vakuumpumpe 38 aus dem Desorber 12 geförderte Gas wird durch ein geeignetes Entlüftungssystem, welches sich an den weiteren Gasaustritt 40 anschließt, abgeführt.

Sollte im Falle einer Störung das Abfließen des Fluids aus dem Vorabscheider 14 zum Desorber 12 nicht möglich sein, wird das Fluidniveau entsprechend des dritten Schaltpunktes L5 im Vorabscheider 14 erreicht. Der dritte Schaltpunkt L5 des Niveaugebers 26 entspricht einem maximalen Füllstand des Fluids im Vorabscheider 14. In diesem Fall wird die Stromzufuhr der ersten Ventileinrichtung 20 unterbrochen und dieses in die zweite Ventilstellung A-C gebracht. Das Fluid fließt unbehandelt über den Notüberlauf 22, vorzugsweise über einen dort angeschlossenen Schlauch, zurück in das Fluidreservoir 16 oder einen separaten Sammeltank.

Das zu entgasende Fluid wird im Desorber 12 über die Zirkulationspumpe 48 umgepumpt. Die Zirkulationspumpe 48 läuft nur, wenn das Fluidniveau entsprechend des ersten Schaltpunktes L1, gemessen durch den weiteren Niveaugeber 36 im Desorber 12, überschritten ist. Der erste Schaltpunkt L1 des weiteren Niveaugebers 36 entspricht einem minimalen Füllstand des Fluids im Desorber 12. Aus dem Fluid tritt beim Durchströmen des Desorbers 12 und beim Umströmen der im Desorber 12 angeordneten Mittel zur Vergrößerung der wirksamen Abscheidefläche Gas aus, das über die Vakuumpumpe 38 abgepumpt wird. Der Temperatursensor 46 misst die Temperatur des ausgetretenen Gases, beispielweise Wasserstoff. Sollte die Temperatur eine für die verwendeten Komponenten kritische Temperatur, beispielsweise 40° Celsius, überschreiten, wird die Vorrichtung 10 aus Sicherheitsgründen im Sinne eines Explosionsschutzes abgeschaltet. Das Fluid fließt in diesem Fall unbehandelt zurück in das Fluidreservoir 16, beispielsweise einen Tank, da auch die Stromzufuhr der ersten Ventileinrichtung 20 unterbrochen und dieses in die zweite Ventilstellung A-C gebracht wird.

Das Fluid wird im Desorber 12 so lange umgepumpt, bis der weitere Drucksensor 44b einen voreingestellten Zieldruck über eine eingestellte Haltezeit misst und die eingestellte Verweilzeit des Fluids im Desorber 12 abgelaufen ist. Der Zieldruck, die Halt- und die Verweilzeit können über die Steuereinheit der Vorrichtung 10 eingestellt werden. Bei einer besonders einfachen Ausgestaltung der Verwendung der Vorrichtung 10 zur Entgasung eines fließfähigen Fluids kann die Haltezeit entfallen. Die der Vakuumpumpe 38 vorgeschaltete dritte Ventileinrichtung 42 wird zum Beenden des Entgasungsvorgangs geschlossen und anschließend die dem Gasanschluss 54 zugeordnete fünfte Ventileinrichtung 56 geöffnet, so lange bis der Druckausgleich im Desorber 12 hergestellt ist. Der Druckausgleich wird beispielsweise mit Stickstoff aus einer Stickstoffgasflasche vorgenommen. Die fünfte Ventileinrichtung 56 wird nach einem Erreichen eines Drucks von zirka 1000 mbar, gemessen durch den weiteren Drucksensor 44a im Desorber 12, wieder geschlossen. Sollte ein Druckausgleich im Desorber 12 nicht möglich sein, wird eine entsprechende Fehlermeldung über die Steuereinheit ausgegeben. Bei optionaler Anordnung eines Druckreglers (in der Figur nicht dargestellt) bleibt die Ventileinrichtung 56 geöffnet und der Druck im Desorber 12 wird durch den Druckregler konstant gehalten.

Anschließend an den Druckausgleich wird die vierte Ventileinrichtung 50 betätigt und das Fluid aus dem Desorber 12 über die Zirkulationspumpe 48 abgepumpt, bis ein Fluidniveau entsprechend des zweiten Schaltpunktes L2 im Desorber 12 erreicht ist. Danach wird die vierte Ventileinrichtung 50 wieder zurück in die gezeigte erste Ventilstellung A-B gestellt und die der Vakuumpumpe 38 zugeordnete dritte Ventileinrichtung 42 wieder geöffnet. Der Zyklus beginnt von neuem, wenn ein Fluidniveau entsprechend des zweiten Schaltpunktes L4 im Vorabscheider 14 wieder erreicht ist.

Im zweiten Betriebsmodus der Entgasung aus dem Fluidreservoir 16 saugt die Vorrichtung 10 selbst das zu entgasende Fluid aus dem Fluidreservoir 16, beispielsweise einem Tank, in den Desorber 12. Hierzu muss das Fluidreservoir 16 durch die weitere Fluidzuleitung 66, die insbesondere als Rohr oder Schlauch ausgebildet ist, mit dem zugehörigen Eintritt an der weiteren Ventileinrichtung 64 verbunden sein. Der zweite Betriebsmodus erfordert, dass die als 3/2-Wege-Kugelhahn ausgebildete weitere Ventileinrichtung 64 zwischen dem Vorabscheider 14 und dem Desorber 12 so eingestellt ist, dass das Fluidreservoir 16 mit dem Desorber 12 fluidführend verbunden ist.

Der Befüllungs-, Entgasungs- und Entleerungsvorgang im Desorber 12 laufen entsprechend nach dem ersten Betriebsmodus ab. Der erste und der zweite Betriebsmodus unterscheiden sich durch eine unterschiedliche Anzahl von Abscheidestufen. Im ersten Betriebsmodus werden zwei Abscheidestufen, eine im Vorabscheider 14 und eine im Desorber 12, durchgeführt, wohingegen im zweiten Betriebsmodus lediglich eine Abscheidestufe im Desorber 12 durchgeführt wird. Der Vorabscheider 14 wird im zweiten Betriebsmodus nicht verwendet und die Schaltpunkte L3 und L4 des zugehörigen Niveaugebers 26 sind in diesem Betriebsmodus nicht aktiv. Um den Vorabscheider 14 dennoch vor Überfüllung zu schützen, ist der dritte Schaltpunkt L5 auch im zweiten Betriebsmodus aktiv.

Im dritten Betriebsmodus werden die dem Vorabscheider 14, dem Desorber 12, dem weiteren Gasaustritt 40, dem Gasanschluss 54 und dem Fluidaustritt 52 zugeordneten Ventileinrichtungen 20, 24, 42, 46 und 50 manuell geschaltet. Auch die Vakuumpumpe 38 und die Zirkulationspumpe 48 werden manuell an- und abgeschaltet.

Vor dem Einschalten der Vakuumpumpe 38 muss im Desorber 12 ein Druckausgleich durchgeführt werden. Hierzu werden die dritte Ventileinrichtung 42 und die fünfte Ventileinrichtung 56 geöffnet, bis der Druckausgleich im Desorber 12 stattgefunden hat. Die zugehörige Messung erfolgt über den weiteren Drucksensor 44a. Während des Anlaufens der Vakuumpumpe 38 können die beiden Ventileinrichtungen 42, 56 nicht manuell geschaltet werden.

Die beiden vorstehenden Absätze beziehen sich auf die Verwendung einer Membranpumpe, nicht jedoch auf die Verwendung einer Drehschieberpumpe.

Sollte der dritte Schaltpunkt L6 im Desorber 12 erreicht werden, wird die zweite Ventileinrichtung 24 geschlossen und der Handbetrieb insoweit übergangen. Sollte der dritte Schaltpunkt L5 im Vorabscheider 14 erreicht werden, wird die erste Ventileinrichtung 20 stromlos gesetzt und das Fluid fließt unbehandelt über den Notüberlauf 22 zurück in das Fluidreservoir 16. Die erste Ventileinrichtung 20 befindet sich dann in der zweiten Ventilstellung A-C.

Der in der Tropfwanne angeordnete Schwimmerschalter 34 wird beim Austritt von Fluid aktiviert. In diesem Fall wird die Vakuumpumpe 38 abgeschaltet und die zweite Ventileinrichtung 24 geschlossen sowie die erste Ventileinrichtung 20 stromlos gesetzt. Um zu verhindern, dass der Desorber 12 überfüllt werden kann, wird die zweite Ventileinrichtung 24 bei Erreichen des Fluidniveaus entsprechend des dritten Schaltpunktes L6 im Desorber 12 geschlossen. Die Niveaugeber 26, 36 sind am Vorabscheider 14 bzw. am Desorber 12 als Öffner ausgeführt. Im Falle eines Kabelbruches der Niveaugeber 26, 36 oder der Sensoren 32, 44a, 44b und 46 wird die Vorrichtung 10 abgeschaltet.

Besonders bevorzugt ist bei der Vorrichtung 10 zur Entgasung von fließfähigen Fluiden, insbesondere bei der Verwendung zur Entladung eines flüssigen Wasserstoffspeichers, eine Messdatenaufzeichnung vorgesehen. Die Schaltstellung der Ventileinrichtungen 20, 24, 42, 50 und 56 kann über die Zeit aufgezeichnet werden. Ebenso kann der Status der Motoren M der Zirkulationspumpe 48 und der Vakuumpumpe 38 über die Zeit aufgezeichnet werden. Als Messdaten werden weiter der Druck und die Temperatur im Desorber 12 erfasst. Drücke über 400 mbar werden mit dem ersten weiteren Drucksensor 44a für den Messbereich 0 bis 1000 mbar gemessen, Drücke unter 400 mbar mit dem zweiten weiteren Drucksensor 44b im Messbereich 0-400 mbar. Das Messintervall und die Aufzeichnungszeit können über die Steuereinheit der Vorrichtung 10 eingestellt werden. Zweckmäßigerweise werden die aufgezeichneten Messdaten in der Vorrichtung 10 gespeichert und über einen Medienanschluss, beispielsweise einen USB-Anschluss als CSV-Datei, ausgegeben und auf ein externes Speichermedium übertragen. Es ist jedoch auch eine Online-Messdatenaufzeichnung beim Betrieb der Vorrichtung 10 vorstellbar.

Im gezeigten Ausführungsbeispiel beträgt das Fluidvolumen ΔVᵥ zwischen dem ersten und zweiten Schaltpunkt L3, L4 des Niveaugebers 26 im Vorabscheider 14 10,51. Das Fluidvolumen ΔV_{D3} zwischen dem zweiten und dritten Schaltpunkt L2, L6 des weiteren Niveaugebers 36 im Desorber 12 beträgt ebenfalls 10,5l. Somit entspricht das bei der Befüllung aus dem Vorabscheider 14 in den Desorber 12 geführte Fluidvolumen dem bei der Entleerung aus dem Desorber 12 abgeführten Fluidvolumen. Das Fluidvolumen ΔV_{D2} zwischen dem ersten und zweiten Schaltpunkt L1, L2 des weiteren Niveaugebers 36 beträgt 1,10l. Der minimale Füllstand entsprechend des ersten Schaltpunktes L1 des weiteren Niveaugebers 36 AV_{D1} beträgt 1,05l. Es versteht sich, dass je nach Ausgestaltung der Vorrichtung 10 und den Behältermaßen des Vorabscheiders 14 und des Desorbers 12 die entsprechenden Fluidvolumina variieren und bedarfsgerecht gewählt sind.

Alternativ zur Befüllung über die weitere Ventileinrichtung 64 und die zweite Ventileinrichtung 24 unter Nutzung einer Druckdifferenz kann der Desorber 12 unter Nutzung einer Pumpe, wie der Zirkulationspumpe 48, befüllt werden. Bei dieser Variante der Vorrichtung 10 zur Entgasung von fließfähigen Fluiden ist eine sechste Ventileinrichtung 72 in der vom Desorber 12 zur Zirkulationspumpe 48 führenden Fluidleitung angeordnet und weiter mit dem Vorabscheider 14 fluidführend verbunden. In der in der Figur gezeigten ersten Ventilstellung der als 3/2-Wegeventil ausgebildeten sechsten Ventileinrichtung 72 ist entsprechend des Zirkulationsbetriebs während der Entgasung der Desorber 12 mit der Zirkulationspumpe 48 verbunden. In der zweiten Ventilstellung der sechsten Ventileinrichtung 72 ist der Vorabscheider 14 entsprechend eines Befüllungsvorgangs mit der Zirkulationspumpe 48 verbunden, so dass diese Fluid vom Vorabscheider 14 über die vierte Ventileinrichtung 50 in den Desorber 12 pumpen kann. Von der Verbindungsleitung zwischen der sechsten Ventileinrichtung 72 und der Zirkulationspumpe 48 zweigt eine weitere Fluidleitung ab, die nach der fünften Ventileinrichtung 50 in die zum Fluidaustritt 52 führende Fluidleitung mündet und ein Druckbegrenzungsventil 74 als Sicherheitsventil für die Zirkulationspumpe 48 beinhaltet.

## Patentansprüche

1. Verfahren zur Entgasung von Wasserstoff aus einer zur Wasserstoffspeicherung eingesetzten Flüssigkeit mittels einer Vorrichtung (10), umfassend einen Desorber (12), einen mit dem Desorber (12) verbundenen Gasanschluss (54), eine Zirkulationspumpe (48), eine Vakuumpumpe (38), mindestens einen Sensor (44a, 44b), und eine Steuereinheit, mit folgenden Verfahrensschritten:
- Befüllen des Desorbers (12) mit der zu entgasenden Flüssigkeit, wobei bei einem Befüllungsvorgang mit der Flüssigkeit mittels der Vakuumpumpe (38) ein Unterdruck im Desorber (12) erzeugbar ist, und Durchströmen des Desorbers (12) von dieser Flüssigkeit;
- Umwälzen der Flüssigkeit während eines Entgasungsvorgangs im Desorber (12) mittels der Zirkulationspumpe (48);
- Abführen des Wasserstoffgases aus dem Desorber (12) beim Entgasungsvorgang mittels der Vakuumpumpe (38);
- Messen des Drucks im Desorber (12) und/oder Messen der Zeit mittels des jeweiligen Sensors (44a, 44b);
- Beenden des Entgasungsvorgangs bei Messen eines vorgegebenen Drucks durch den jeweiligen Sensor (44a, 44b) und/oder bei Messung einer vorgegebenen Verweildauer der Flüssigkeit im Desorber (12) mittels der Steuereinheit; und
- Zuleiten eines weiteren Gases über den Gasanschluss (54) in den Desorber (54) während einer Entleerung der Flüssigkeit aus dem Desorber (12), so dass ein Druckausgleich stattfindet und neben dem zur Entleerung erforderlichen Druck eine Gasatmosphäre im Innenraum des Desorbers (12) erzeugt wird, die ein Entflammen einer möglicherweise im Desorber (12) verbliebenen Restmenge des abgetrennten Wasserstoffs wirksam unterbindet.

2. Verfahren nach Anspruch 1, **dadurch gekennzeichnet, dass** im Desorber (12) Mittel zur Vergrößerung der wirksamen Abscheideflächen, vorzugsweise zylindrische, kugelförmige oder kegelförmige Edelstahlfüllkörper, eingebracht sind, welche den Innenraum des Desorbers (12) zumindest teilweise füllen.

3. Verfahren nach Anspruch 1 oder 2, **dadurch gekennzeichnet, dass** ein Vorabscheider (14) zwischen einem Fluidreservoir (16) und dem Desorber (12) geschaltet und mit Fluid aus dem Fluidreservoir (16) befüllbar ist.

4. Verfahren nach einem der vorhergehenden Ansprüche, **dadurch gekennzeichnet, dass** im Vorabscheider (14) und/oder im Desorber (12) ein Niveaugeber (26, 36) vorgesehen ist mit mindestens einem dem Befüllungs-, Entleerungs- und/oder dem Entgasungsvorgang zugeordneten Schaltpunkt (L3, L4; L1, L2, L6) entsprechend des jeweiligen Füllstands des Fluids.

5. Verfahren nach Anspruch 3 oder 4, **dadurch gekennzeichnet, dass** der Gasanschluss (54) mit dem Vorabscheider (14) verbunden ist zum Druckausgleich während einer Entleerung.

6. Verfahren nach einem der vorhergehenden Ansprüche, **dadurch gekennzeichnet, dass** am Desorber (12) ein Gasaustritt (40), welcher sich an eine Ventileinrichtung (42) und die Vakuumpumpe (38) anschließt, und ein Fluidaustritt (52), welcher sich an die Zirkulationspumpe (48) und eine Ventileinrichtung (50) anschließt, angeordnet sind.

7. Verfahren nach einem der Ansprüche 3 bis 6, **dadurch gekennzeichnet, dass** zwischen dem einer Fluidzuleitung (18) zugeordneten Vorabscheider (14) und dem Desorber (12) eine Ventileinrichtung (24) und eine einer weiteren Fluidzuleitung (66) zugeordnete weitere Ventileinrichtung (64), vorzugsweise ein Wegehahn, angeordnet sind, und dass der Desorber (12) in Abhängigkeit der Stellung der weiteren Ventileinrichtung (64) über die Fluidzuleitung (18) und den Vorabscheider (14) oder über die weitere Fluidzuleitung (66) mit zu entgasendem Fluid befüllbar ist.

8. Verfahren nach Anspruch 6 oder 7, **dadurch gekennzeichnet, dass** für einen Entleerungsvorgang ein weiteres Gas, Stickstoff, zum Druckausgleich über eine Zuleitung (58) in den Desorber (12) geleitet und anschließend mittels der Zirkulationspumpe (48) das entgaste Fluid aus dem Desorber (12) zum Fluidaustritt (52) geleitet wird.

9. Verfahren nach Anspruch 7 oder 8, **dadurch gekennzeichnet, dass** beim Befüllungsvorgang mittels der Vakuumpumpe (38) ein Unterdruck im Desorber (12) erzeugt und anschließend zu entgasendes Fluid von einem Fluidreservoir (16) über die Fluidzuleitung (18) und den Vorabscheider (14) oder über die weitere Fluidzuleitung (66) in den Desorber (12) geleitet wird.

10. Verfahren nach einem der Ansprüche 7 bis 9, **dadurch gekennzeichnet, dass** in einem ersten Betriebsmodus der Vorrichtung (10) beim Befüllungsvorgang
- eine der Fluidzuleitung (18) zugeordnete Ventileinrichtung (20) geöffnet und zu entgasendes Fluid aus dem Fluidreservoir (16) in den Vorabscheider (14) geleitet wird bis zum Erreichen eines ersten Schaltpunktes (L4) des zugehörigen Niveaugebers (26),
- die zwischen dem Vorabscheider (14) und dem Desorber (12) angeordnete Ventileinrichtung (24) geöffnet und das zumindest teilweise entgaste Fluid aus dem Vorabscheider (14) in den Desorber (12) geleitet wird bis zum Erreichen eines zweiten Schaltpunktes (L6) des zugehörigen weiteren Niveaugebers (36), und
- die dem Vorabscheider (14) vorgeschaltete Ventileinrichtung (20) und die zwischen den Vorabscheider (14) und den Desorber (12) geschaltete Ventileinrichtung (24) geschlossen werden.

11. Verfahren nach einem der Ansprüche 7 bis 10, **dadurch gekennzeichnet, dass** in einem zweiten Betriebsmodus der Vorrichtung (10) beim Befüllungsvorgang
- die der weiteren Fluidzuleitung (66) zugeordnete, dem Desorber (12) vorgeschaltete Ventileinrichtung (24) geöffnet und zu entgasendes Fluid aus dem Fluidreservoir (16) in den Desorber (12) geleitet wird bis zum Erreichen eines zweiten Schaltpunktes (L6) des zugehörigen weiteren Niveaugebers (36), und
- die zugehörige Ventileinrichtung (24) geschlossen wird.

12. Verfahren nach einem der vorhergehenden Ansprüche, **dadurch gekennzeichnet, dass** das beim Entleerungsvorgang aus dem Desorber (12) abgeführte Fluidvolumen (ΔV_{D3}) dem beim Befüllungsvorgang zugeführten Fluidvolumen (ΔVᵥ) entspricht.

13. Verfahren nach einem der vorhergehenden Ansprüche, **dadurch gekennzeichnet, dass** das Fluid ein zur Wasserstoffspeicherung eingesetztes Medium, vorzugsweise Dibenzyltoluol, ist, aus welchem mittels der Vorrichtung (10) Wasserstoff abgeschieden wird.

## Claims

1. Method for degassing hydrogen from a liquid used for hydrogen storage by means of a device (10), comprising a desorber (12), a gas connection (54) connected to the desorber (12), a circulation pump (48), a vacuum pump (38), at least one sensor (44a, 44b), and a control unit, having the following method steps:
- filling the desorber (12) with the liquid to be degassed, wherein, during a filling process with the liquid, a vacuum can be generated in the desorber (12) by means of the vacuum pump (38), and this liquid flows through the desorber (12);
- circulating the liquid during a degassing process in the desorber (12) by means of the circulation pump (48);
- removing the hydrogen gas from the desorber (12) during the degassing process by means of the vacuum pump (38);
- measuring the pressure in the desorber (12) and/or measuring the time by means of the respective sensor (44a, 44b);
- ending the degassing process when the respective sensor (44a, 44b) measures a predetermined pressure and/or on measuring a predetermined residence time of the liquid in the desorber (12) by means of the control unit; and
- feeding a further gas into the desorber (12) via the gas connection (54) during draining of the liquid from the desorber (12) so that pressure equalisation takes place and, in addition to the pressure required for draining, a gas atmosphere is generated in the interior of the desorber (12) which effectively prevents ignition of a residual quantity of the separated hydrogen possibly remaining in the desorber (12).

2. Method according to claim 1, **characterised in that** means for enlarging the effective separating surfaces, preferably cylindrical, spherical or conical stainless steel filling materials, which at least partially fill the interior of the desorber (12), are incorporated in the desorber (12).

3. Method according to claim 1 or 2, **characterised in that** a pre-separator (14) is connected between a fluid reservoir (16) and the desorber (12) and can be filled with fluid from the fluid reservoir (16).

4. Method according to one of the preceding claims, **characterised in that** a level sensor (26, 36) with at least one switching point (L3, L4; L1, L2, L6), which is associated with the filling, draining and/or degassing process and which corresponds to the respective level of the fluid, is provided in the pre-separator (14) and/or the desorber (12).

5. Method according to claim 3 or 4, **characterised in that** the gas connection (54) is connected to the pre-separator (14) for pressure equalisation during draining.

6. Method according to one of the preceding claims, **characterised in that** a gas outlet (40), which connects to a valve device (42) and the vacuum pump (38), and a fluid outlet (52), which connects to the circulation pump (48) and a valve device (50), are arranged on the desorber (12).

7. Method according to one of claims 3 to 6, **characterised in that** a valve device (24) and a further valve device (64), preferably a directional control valve, associated with a further fluid feed line (66) are arranged between the pre-separator (14) associated with a fluid feed line (18) and the desorber (12), and **in that**, depending on the position of the further valve device (64), the desorber (12) can be filled with fluid to be degassed via the fluid feed line (18) and the pre-separator (14) or via the further fluid feed line (66).

8. Method according to claim 6 or 7, **characterised in that**, for a draining process, a further gas, nitrogen, is fed into the desorber (12) via a feed line (58) for pressure equalisation and subsequently the circulation pump (48) is used to route the degassed fluid out of the desorber (12) to the fluid outlet (52).

9. Method according to claim 7 or 8, **characterised in that**, during the filling process, a vacuum is generated in the desorber (12) by means of the vacuum pump (38) and subsequently fluid to be degassed is routed from a fluid reservoir (16) into the desorber (12) via the fluid feed line (18) and the pre-separator (14) or via the further fluid feed line (66).

10. Method according to one of claims 7 to 9, **characterised in that** in a first operating mode of the device (10) during the filling process
- a valve device (20) associated with the fluid feed line (18) is opened and fluid to be degassed is routed from the fluid reservoir (16) into the pre-separator (14) until a first switching point (L4) of the associated level sensor (26) is reached,
- the valve device (24) arranged between the pre-separator (14) and the desorber (12) is opened and the at least partially degassed fluid is routed from the pre-separator (14) into the desorber (12) until a second switching point (L6) of the associated level sensor (36) is reached, and
- the valve device (20) connected upstream of the pre-separator (14) and the valve device (24) connected between the pre-separator (14) and the desorber (12) are closed.

11. Method according to one of claims 7 to 10, **characterised in that** in a second operating mode of the device (10) during the filling process
- the valve device (24) associated with the further fluid feed line (66) and connected upstream of the desorber (12) is opened and fluid to be degassed is routed from the fluid reservoir (16) into the desorber (12) until a second switching point (L6) of the associated further level sensor (36) is reached, and
- the associated valve device (24) is closed.

12. Method according to one of the preceding claims, **characterised in that** the fluid volume (ΔV_{D3}) discharged from the desorber (12) during the draining process corresponds to the fluid volume (ΔVᵥ) fed in during the filling process.

13. Method according to one of the preceding claims, **characterised in that** the fluid is a medium used for hydrogen storage, preferably dibenzyltoluene, from which hydrogen is separated by means of the device (10).

## Revendications

1. Procédé pour dégager de l'hydrogène d'un liquide utilisé pour stocker de l'hydrogène au moyen d'une installation (10) comprenant un désorbeur (12), un raccord (54) pour du gaz relié au désorbeur (12), une pompe (48) de recirculation, une pompe (38) à vide, au moins un capteur (44a, 44b), et une unité de commande, par des stades de procédé suivants :
- on remplit le désorbeur (12) du liquide à dégazer, dans lequel lors d'une opération de remplissage par le liquide, on produit une dépression dans le désorbeur (12) au moyen de la pompe (38) à vide et on fait traverser le désorbeur (12) par ce liquide ;
- on recircule le liquide pendant une opération de dégagement dans le désorbeur (12) au moyen de la pompe (48) de recirculation ;
- on évacue l'hydrogène gazeux du désorbeur (12) lors de l'opération de dégagement au moyen de la pompe (38) à vide ;
- on mesure la pression dans le désorbeur (12) et/ou on mesure le temps au moyen du capteur (44a, 44b) respectif ;
- on met fin, au moyen de l'unité de commande, à l'opération de dégagement si l'on mesure une pression donnée à l'avance par le capteur (44a, 44b) respectif et/ou si l'on mesure une durée de séjour donnée à l'avance du liquide dans le désorbeur (12) ; et
- on envoie un autre gaz par le raccord (54) pour du gaz dans le désorbeur (12) pendant que l'on vide le désorbeur (12) du liquide de manière à donner lieu à une compensation de pression et à produire outre la pression nécessaire à la vidange une atmosphère gazeuse à l'intérieur du désorbeur (12), qui interdit efficacement une inflammation d'une quantité restante de l'hydrogène séparé restant éventuellement dans le désorbeur (12).

2. Procédé suivant la revendication 1, **caractérisé en ce que** l'on introduit dans le désorbeur (12) des moyens d'agrandissement des surfaces de séparation efficaces, de préférence des corps de remplissage en acier fin, cylindriques, sphériques ou coniques, qui remplissent au moins en partie l'intérieur du désorbeur (12).

3. Procédé suivant la revendication 1 ou 2, **caractérisé en ce qu'**un pré-séparateur (14) est monté entre un réservoir (16) de fluide et le désorbeur (12) et peut être rempli de fluide provenant du réservoir (16) de fluide.

4. Procédé suivant l'une des revendications précédentes, **caractérisé en ce qu'**il est prévu dans le pré-séparateur (14) et/ou dans le désorbeur (12) un indicateur (26, 36) de niveaux ayant au moins un point (L3, L4 ; L1, L2, L6) de commutation associée au remplissage, à l'évacuation et/ou au dégagement conformément au niveau de remplissage respectif par le fluide.

5. Procédé suivant la revendication 3 ou 4, **caractérisé en ce que** le raccord (54) pour du gaz est relié au pré-séparateur (14) pour compenser la pression pendant une évacuation.

6. Procédé suivant l'une des revendications précédentes, **caractérisé en ce que** sur le désorbeur (12) sont montées une sortie (40) de gaz qui se raccorde à un dispositif (42) de vanne et à la pompe (38) à vide, et une sortie (52) de fluide, qui se raccorde à la pompe (48) de recirculation et à un dispositif (50) de vanne.

7. Procédé suivant l'une des revendications 3 à 6, **caractérisé en ce que** entre le pré-séparateur (14) associé à un conduit (18) d'apport de fluide et le désorbeur (12) sont montés un dispositif (24) de vanne et un autre dispositif (64) de vanne, de préférence à un robinet à plusieurs voies, associé à un autre conduit (66) d'apport de fluide et **en ce que** le désorbeur peut, en fonction de la position de l'autre dispositif (64) de vanne, être rempli du fluide à dégazer par le conduit (18) d'apport de fluide et par le pré-séparateur (14) ou par l'autre conduit (66) d'apport de fluide.

8. Procédé suivant la revendication 6 ou 7, **caractérisé en ce que** pour une opération d'évacuation, on envoie un autre gaz, de l'azote, pour la compensation de pression par un conduit (58) d'apport dans le désorbeur (12) et ensuite, on envoie au moyen de la pompe (48) de recirculation le fluide dégazé du désorbeur (12) à la sortie (52) de fluide.

9. Procédé suivant la revendication 7 ou 8, **caractérisé en ce que**, lors de l'opération de remplissage, on produit au moyen de la pompe (38) à vide une dépression dans le désorbeur (12) et ensuite on envoie du fluide à dégazer d'un réservoir (16) de fluide au désorbeur (12) par le conduit (18) d'apport de fluide et le pré-séparateur (14) ou par l'autre conduit (66) d'apport de fluide.

10. Procédé suivant l'une des revendications 7 à 9, **caractérisé en ce que**, dans un premier mode de fonctionnement de l'installation (10) lors de l'opération de remplissage,
- on ouvre le dispositif (20) de vanne associé au conduit (18) d'apport de fluide et on envoie du fluide à dégazer du réservoir (16) de fluide au pré-séparateur (14) jusqu'à obtenir un premier point (L4) de commutation de l'indicateur (26) de niveau associé,
- on ouvre le dispositif (24) de vanne disposé entre le pré-séparateur (14) et le désorbeur (12) et on envoie le fluide dégazé au moins en partie du pré-séparateur (14) au désorbeur (12) jusqu'à l'obtention d'un deuxième point (L6) de commutation de l'autre indicateur (36) de niveau associé, et
- on ferme le dispositif (20) de vanne monté en amont du pré-séparateur (14) et le dispositif (24) de vanne monté entre le pré-séparateur (14) et le désorbeur (12).

11. Procédé suivant l'une des revendications 7 à 10, **caractérisé en ce que**, dans un deuxième mode de fonctionnement de l'installation (10), lors de l'opération de remplissage,
- on ouvre le dispositif (24) de vanne associé à l'autre conduit (66) d'apport de fluide et monté avant le désorbeur (12) et on envoie du fluide à dégazer du réservoir (16) de fluide au désorbeur (12) jusqu'à l'obtention d'un deuxième (L6) de commutation de l'autre indicateur (36) de niveau associé, et
- on ferme le dispositif (24) de vanne associé.

12. Procédé suivant l'une des revendications précédentes, **caractérisé en ce que** le volume (ΔV_{D3}) de fluide évacué du désorbeur (12) lors de l'opération d'évacuation correspond au volume (ΔVᵥ) de fluide apporté lors de l'opération de remplissage.

13. Procédé suivant l'une des revendications précédentes, **caractérisé en ce que** le fluide est un milieu utilisé pour le stockage de l'hydrogène, en étant de préférence du dibenzyltoluène, dont de l'hydrogène est séparé au moyen de l'installation (10).
